# EUROPÄISCHE PATENTSCHRIFT

(11) **EP 2 658 816 B1**
(45) Veröffentlichungstag und Bekanntmachung des Hinweises auf die Patenterteilung: **11.05.2016**
(21) Anmeldenummer: 11837312.5
(22) Anmeldetag: 29.12.2011
(51) Int. Cl.: C02F 3/10

(54) **VERFAHREN ZUR AEROBEN REINIGUNG VON ABWASSER**
PROCESS FOR AEROBIC CLEANING OF WASTEWATER
PROCÉDÉ D'ÉPURATION AÉROBIE D'EAUX USÉES

(30) Priorität: 29.12.2010 DE 102010061613
(43) Veröffentlichungstag der Anmeldung: 06.11.2013
(73) Patentinhaber: Blum, Holger, 9053 Teufen (CH)
(72) Erfinder: Blum, Holger, 9053 Teufen (CH)
(74) Vertreter: Puschmann Borchert Bardehle Patentanwälte Partnerschaft mbB
(86) Internationale Anmeldenummer: PCT/EP2011/074213
(87) Internationale Veröffentlichungsnummer: WO 2012/089801

(56) Entgegenhaltungen:
- WO-A1-2004/054936
- DE-U1-202009 008 291
- AquaPoint: "LotusTM-AquaCellTM Wastewater Treatment Systems", aquapoint.com , 19. Januar 2010 (2010-01-19), XP002681143, Gefunden im Internet: URL:http://www.aquapoint.com/images/AquaCE LL_Brochure_Electronic.pdf [gefunden am 2012-08-01]

## Beschreibung

Die Erfindung betrifft ein Verfahren zur aeroben Reinigung von Abwasser.

Bei allen Methoden zur aeroben biologischen Abwasserreinigung tritt sog. Überschussschlamm auf, welcher zusammen mit dem Primärschlamm der Vorreinigung als Klärschlamm entsorgt werden muss.

In der Abwasserbehandlung betragen die Kosten für die Entsorgung von Klärschlamm etwa 30- 60 % der Gesamtkosten. Neue EU-Richtlinien erhöhen die Anforderungen an die Behandlung kommunaler Abwässer (Urban Wastewater Treatment Directive 91/271/EEC) und sorgen für einen weiteren Anstieg der Klärschlammproduktion, während gleichzeitig zusätzliche Einschränkungen an die Klärschlammentsorgung gestellt werden (Sewage Sludge Directive 86/278/EEC).

Zur Lösung dieser Probleme werden in der Technik zur Zeit drei Ansätze verfolgt. Diese sind (i) die Umwandlung von Klärschlamm in Wertstoffe, (ii) Handhabung der existierenden Schlammentsorgungsmethoden und (iii) die Reduzierung der Überschussschlammproduktion.

US-A-4,931,442 lehrt, dass biologisch aktive L-Folsäure in wässriger Lösung durch Zugabe von u.a. Dihydrofolsäure stabilisiert werden kann gegen die vorzeitige Razemisierung infolge von Zutritt von Luftsauerstoff. Die Zubereitung mit verbesserter Gehaltsstabilität in Gegenwart von Sauerstoff enthält Folsäure und/oder mindestens ein Ammonium-, Alkalimetall- und/oder Erdalkalimetallsalz derselben, sowie als Stabilisator eine Kombination aus Dihydrofolsäure und/oder mindestens einem Ammonium-, Alkalimetall-, Erdalkalimetall- und/oder Alkanolammoniumsalz derselben und mindestens einer Hydroxypolycarbonsäure und/oder mindestens einem Ammonium-, Alkalimetall-, Erdalkalimetall- und/oder Alkanolammoniumsalz derselben.

EP1 578 698 offenbart eine Zubereitung , die Folsäure und/oder Dihydrofolsäure oder mindestens ein Ammonium, Alkalimetall, Erdalkalimetall und/oder alkanolammonium Salz davon und eine wasserlösliche Molybdänverbindung und ein polydental Polyoxäthylenmittel enthält. Das polydental Polyoxäthylenmittel wird durch die folgende Formel I dargestellt, 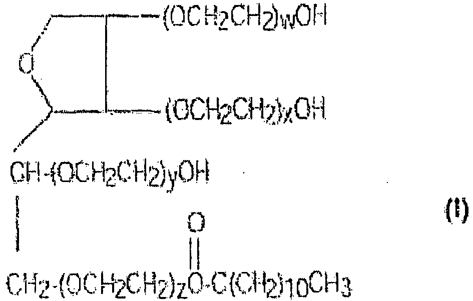 worin W + x + y + z Werte von 15 bis 25 hat. Diese stabilisierte wässrige Folsäure-Zubereitung ist nützlich als Zusatz für biologische Abwasserkläranlagen, wobei eine verbesserte Schlamm-Dehydratation des aktivierten Schlammgehalts erzielt wird.

US-A-5,624,564 lehrt, dass durch Dosierung einer wässrigen Zubereitung von stabilisierter Folsäure hergestellt nach US-A-4,9314,42 und nach EP1 578 698 (Handelsbezeichnung DOSFOLAT®XS) beim Belebtschlammverfahren die anfallende Klärschlammmenge reduziert wird.

Die Diplomarbeit (2006) an der Hochschule Wismar, von Ch. Schuldt, "Untersuchungen des Einflusses einer Zugabe von Folsäure auf den Überschussschlammanfall bei der Reinigung häuslichen Abwassers mit dem Belebtschlammverfahren" weisst nach, dass durch Dosierung einer wässrigen Zubereitung von stabilisierter Folsäure (Handelsbezeichnung DOSFOLAT®XS) die Überschussschlammenge beim sog. biologischen SBR -Verfahren um 43 Prozent vermindert werden kann.

Die Diplomarbeit (2007) an der Fachhochschule Köln, von M. Lanzrath, "Einsatz des Hilfsstoffes DOSFOLAT® in Abwasserreinigungsanlagen zur Leistungssteigerung und Kostensenkung am Beispiel der Kläranlage Bonn-Duisdorf" weisst nach, dass durch Dosierung einer wässrigen Zubereitung von stabilisierter Folsäure (Handelsbezeichnung DOSFOLAT®XS) die Überschussschlammenge beim sog. Belebtschlammverfahren um 30 Prozent vermindert werden kann.

Das Schwebebettverfahren ist eine aerobe Abwasserreinigungsmethode, welche durch eine höhere Durchsatzleistung gegenüber dem bekannten Belebtschlammverfahren oder dem bekannten SBR-Verfahren gekennzeichnet ist.

DE 20 2009 008 291 beschreibt eine Vorrichtung zum Reinigen von Abwasser in einem Durchlauftank, welcher frei ist von inneren Obstruktionen. Der Durchlauftank ist gefüllt mit dem zu reinigenden Abwasser und mit Schwebekörpern auf denen Mikroorganismen siedeln, welche die Schmutzfracht im Abwasser aerob verstoffwechseln. Der Durchlauftank nach DE 20 2009 008 291 weist am Boden Rechteckrohre mit Düsenöffnungen auf, durch welche Luft in den Durchlauftank geblasen wird, um die Mikroorganismen mit Sauerstoff zu versorgen und um die Schwebekörper im Wasser in Bewegung zu halten.

Die Reinigungsleistung eines Schwebebettreaktors hängt ab von der Menge der Schwebekörper pro Volumeneinheit des Durchlauftanks und von der spezifischen Oberfläche in m²/m³ der Schwebekörper, weil die Anzahl der sessilen Mikroorganismen proportional ist zur im Durchlauftank vorhandenen gesamten Schwebekörperoberfläche.

Die Menge der Schwebekörper pro Volumeneinheit des Durchlauftanks kann nicht beliebig gesteigert werden, will man nicht die freie Beweglichkeit der Schwebekörper behindern.

Infolgedessen strebt man durch konstruktive Ausgestaltung der Schwebekörper eine möglichst hohe spezifische Oberfläche an z.B. durch 5 bis 10 mm hohe Rippenrohrstücke aus Polyethylen welche eine innere und äußere Berippung ausweisen. Derartige Schwebekörper sind beschrieben in EP 0 575 531.

Es ist bekannt, dass dieser Abrieb des Biofilms die Reinigungsleistung des Schwebebettverfahrens nach herkömmlicher Verfahrensweise mindert. Um diesen Abrieb zu vermindern schlägt EP 0 750 591 vor, die als ca. 30 bis 60 mm lange Rohrstücke geformten Schwebekörpern nur im Innern mit Rippen zu versehen und zum Schutz gegen Abrieb außen auf Rippen zu verzichten und stattdessen außen noch zusätzlich Stossleisten anzubringen.

Aus AquaPoint:"LotusTM-AquaCellTM Wastwater Treatment Systems", 19. Januar 2010 (2010-01-19), siehe URL:http://www.qauapoint.com/images/AquaCell Brochure Electronic.pdf, sind Schwebekörper bekannt, die eine gringe Menge an Schlamm bilden sollen.

Darüber hinaus schlägt US-A-7,189,323 vor, den Schwebekörpern statt die Form eines Rippenrohrstückes die Form einer flachen Diskusscheibe mit vorzugsweise 30 bis 60 mm Durchmesser zu geben, um diesen Abrieb zu vermindern.

Die nach EP 0 750 591 und US-A-7,189,323 hergestellten Trägerelemente müssen im Spritzgussverfahren hergestellt werden und sind daher größer und teurer als die Innen und Außen mit Rippen oder Rillen versehenen rohrförmigen Schwebekörper welche als kontinuierlicher Rohrstrang hergestellt werden können.

Es ist Aufgabe der Erfindung ein Verfahren zur aeroben Reinigung von Abwasser mit einem Schwebebettreaktor bereitzustellen, welches bei maximaler Reinigungsleistung eine minimale Menge an Überschussschlamm liefert.

Zu Verringerung der Menge an Überschussschlamm beim Reinigen des Abwasser weist das erfindungsgemäße Verfahren die Merkmale von Anspruch 1 auf. Vorteilhafte Ausgestaltungen der Erfindung sind in den Unteransprüchen charakterisiert.

Die Schwebekörper im Durchlauftank werden durch Gaseintrag in Bewegung gehalten. Infolge der gegenseitigen Reibung wird der auf der Außenseite des Trägers befindliche Biofilm abgerieben, wenn die Reibungsintensität innerhalb des Durchlauftanks ein gewisses Maß überschreitet. Infolge der starken Reibung der Schwebekörper bewachsen diese größtenteils nur im Innern mit einem deutlich sichtbaren Biofilm.

Obwohl durch die erfindungsgemäße Verfahrensweise 40 bis 50 Prozent der für die sessilen Mikroorganismen verfügbaren Oberfläche verloren geht, konnte überraschenderweise keine Minderung der Reinigungsleistung ausgedrückt in kg verstoffwechselter chemischer Sauerstoffbedarf (CSB) pro Tag und Kubikmeter Reaktorvolumen festgestellt werden.

Offenbar wirkt die stabilisierte Folsäurezubereitung im Abwasser in synergistischer Verbindung mit dem "Kugelmühleneffekt" welcher durch die starke Reibung der Schwebekörper gegeneinander entsteht in

Der Einsatz des Schwebebettreaktor nach DE 20 2009 008 291 ist für die erfindungsgemäße Verfahrensweise von Vorteil, weil dieser Reaktor keine inneren Einbauten oder Obstruktionen aufweist, weshalb die Turbulenz der Schwebekörper nicht wesentlich gebremst wird und daher weniger Druckluftenergie zum Betrieb des Schwebebettreaktors notwendig ist.

Nach eine vorteilhaften Ausführungsform der Erfindung beträgt die Temperatur des Abwassers in den Schwebebettreaktoren zwischen etwa 12 bis 55°C, da die Mikroorganismen bei diesen Temperaturen ihre Aktivitäten optimal entfalten können.

Ausführungsbeispiele der Erfindung werden nun anhand der Zeichnungen beschrieben.
Fig.1 zeigt einen Schwebebettreaktor nach der DE 20 2009 008 291.
Fig. 2 zeigt wie die sessilen Mikroorganismen bei der bislang bekannten Verfahrensweise auf der Außen -und auf der Innenseite der als Rippenrohrstücke geformten Schwebekörper siedeln.
Fig. 3 zeigt, dass die verwendeten Schwebekörper bei dieser erfindungsgemäßen Verfahrenweise nur im Innen mit sessilen Mikroorganismen siedeln.

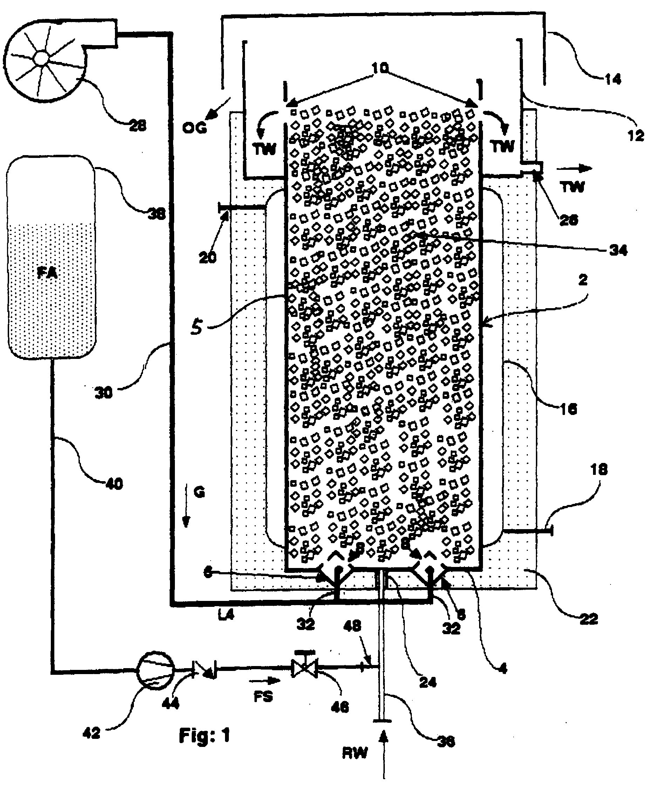

Gemäß Figur 1 weist ein Schwebebettreaktor zum Reinigen vom Abwasser einen Durchlauftank 2 mit einem ebenen Tankboden 4 und einer Tankwand 5 auf, durch den das zu reinigende Abwasser geleitet wird. Im Betrieb ist der Durchlauftank 2 mit dem zu reinigenden Abwasser und mit frei beweglichen, mit Mikroorganismen besiedelten, schwebenden Füllkörpern 34 gefüllten.

In den Tankboden 4 sind rechteckige Verteilerrohre 6 so eingeschweißt, so dass mindest eine Seite der Verteilerrohre 6 mit dem zu reinigenden Abwasser in Kontakt ist. Vorzugsweise werden die Verteilerrohr 6, wie aus Fig.1 ersichtlich, so in den Tankboden 4 eingeschweißt, dass zwei seiner Seitenflächen im Winkel von 45 Grad zu dem ebenen Tankboden 4 stehen, so dass zwei Seiten der Verteilerrohre 6 mit dem zu reinigenden Abwasser in direkten Kontakt. In dieser 45 Grad Stellung wirken die Verteilerrohre maximal als mechanische Versteifung des Bodens und außerdem bewirkt die 45 Grad Stellung der wasserbenetzten Düsenflächen eine optimale Ablösung und Verteilung der aus den Belüftungsdüsen 8 in das Wasser austretenden Gasblasen.

An den Seiten der Verteilerrohre 6, die mit dem zu reinigenden Abwasser in Kontakt stehen, sind Düsenöffnungen 8 vorgesehen. Die Düsenöffnungen 8 haben die Form von Löchern oder Schlitzen, vorzugsweise runde Bohrungen mit etwa 3 bis 6 Millimeter Durchmesser, und sind über die ganze Länge des Verteilerrohres 6 angeordnet. Die Verteilerrohre 6 sind an Ihren Stirnseiten mit Schaugläsern 50 versehen.

Die Verteilerrohre 6 weisen an mindestens einem Rohrende einen Stutzen 32 für die Zufuhr von sauerstoffhaltigem Gas, beispielsweise Luft, an die Verteilerrohre 6 auf. Der Tankboden 6 weist mindestens einen Zuflussstutzen 24 für das zu reinigende Abwasser auf.

Am oberen Umfang des Durchlauftanks 2 sind Ablaufschlitze 10 für das gereinigte Abwasser vorgesehen. Die Ablaufschlitze 10 haben einen Querdurchmesser welcher kleiner ist, als der kleinste Durchmesser der schwebenden Füllkörper 34. Ein Überlaufwehr 12 ist ebenfalls am oberen Umfang des Durchlauftanks 2 vorgesehen, welches den Durchlauftank 2 am oberen Ende unterhalb der Ablaufschlitze 10 kragenförmig umschließt. Das Überlaufwehr 12 weist mindesten einen Abflussstutzen 24 zur Ableitung des gereinigten Abwassers auf.

Das Überlaufwehr 12 ist gegen Eindringen von Fremdstoffen durch einen Tankdeckel 14 geschützt, welcher einen größeren Durchmesser als das Überlaufwehr12 hat und in so weitem Abstand von der Oberkante des Überlaufwehrs 12 angeordnet ist, dass der Abgasstrom OG aus dem Durchlauftank 2 ungehindert ins Freie austreten kann.

Auf der Außenfläche des Durchlauftanks 2 ist eine Heizeinrichtung 16 vorgesehen, die unter Berücksichtigung des Volumens des Durchlauftanks 2 so ausgelegt ist, das die in dem Durchlauftank 2 enthaltene Flüssigkeit auf 12 bis 55 °C aufgeheizt werden kann auch dann, wenn die Umgebungstemperatur geringer ist. Bei diesen Temperaturen ist die Aktivität der Mikroorganismen bei diesen Temperaturen besonders effektiv. Insbesondere können dadurch Temperaturschwankungen in der Umgebung vermieden werden, die den Prozess der Mikroorganismen nachteilig beeinflussen kann.

Die Heizeinrichtung kann einen Wärmetauscher 16 auf der Außenfläche des Durchlauftanks 2 mit mindestens einem Zuflussstutzen 18 und mindestens einem Abflussstutzen 20 für einen flüssigen Wärmeträger, beispielsweise Heizwasser aufweisen. Die Heizeinrichtung ist mit einer Isolierung 22 aus schlecht die Wärme leitenden Isolierstoff vorgesehen, welche außen auf dem Durchlauftank 2 um den Wärmetauscher 16 herum angebracht ist und die Vorrichtung weitgehend umhüllt und vor Wärmeverlust schützt.

Zur Versorgung des Durchlaufbehälters mit einem sauerstoffhaltigen Gas ist ein Kompressor 28 vorgesehen, welcher das Gas über eine Gaszuleitung 30 und durch Stutzen 32 für die Gaszufuhr in den mit Schwebekörpern 34 gefüllten Durchlauftank 2 fördert. Im Betrieb sind die aeroben Mikroorganismen an den Füllkörpern 34 angelagert und bilden an der Oberfläche der Füllkörper 34 eine Schicht. Daher sind die Füllkörper 34 mit einer möglichst großen Oberfläche ausgebildet.

Ferner weist die Vorrichtung einen Folattank 38 auf, der mit wässrig verdünnter, stabilisierter Folsäurelösung (Folat) FA befüllt ist. Zwischen dem Folattank 38 und dem in die Zuflussleitung 36 für das zu reinigende Rohwasser eingesetzten Impfstutzen 48 sind eine Folatleitung 40, eine Dosierpumpe 42, ein Rückschlagventil 44 und ein Regelventil 46 in dieser Reihenfolge vorgesehen.

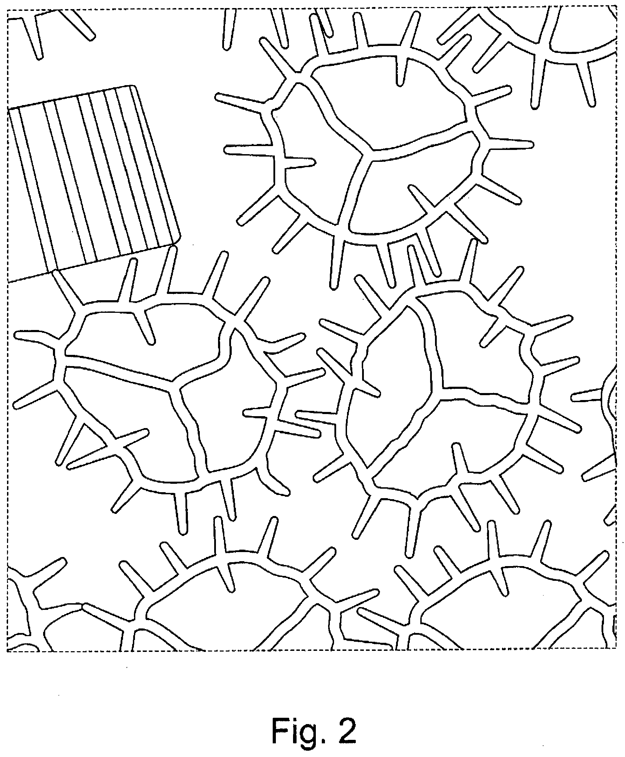

Fig. 2 zeigt wie die sessilen Mikroorganismen bei der bislang bekannten Verfahrensweise auf der Außen -und auf der Innenseite der als Rippenrohrstücke geformten Schwebekörper siedeln, wenn die Belüftungsrate so gewählt wird, dass die Mikroorganismen gerade mit genügend Sauerstoff versorgt werden.

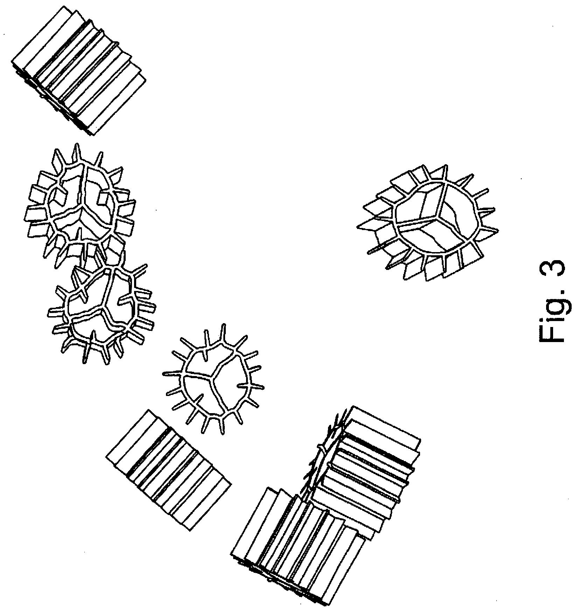

Fig. 3 zeigt, dass die verwendeten Schwebekörper bei dieser erfindungsgemäßen Verfahrenweise nur im Innen mit sessilen Mikroorganismen siedeln, wenn durch Einblasen von Luft eine solche Turbulenz im Innern des Schwebebettreaktors erzeugt wird. die Belüftungsrate (VL) derart gewählt wird, dass infolge der starken Reibung der Schwebekörper diese größtenteils nur auf der Innenseite der Schwebekörper mit einem deutlich sichtbaren Biofilm bewachsen.

Die Erfindung wird nun an Hand der nachstehenden Beispiele erläutert.

### BEISPIEL 1

Künstliches Abwasser mit konstantem chemischen Sauerstoffbedarf CSB wurde durch zwei hintereinander geschaltete Schwebebettreaktoren nach DE 20 2009 008 291 welche aus Plexiglas bestanden und ca. 80 mm inneren Durchmesser haben geleitet. Der Schüttvolumenanteil an Schwebekörpern betrug 50 Prozent. Die Schwebekörper aus Polyäthylen wiesen die Form von Rohrabschnitten auf und waren außen und im Rohrinnern mit Rillen versehen. Die äußeren Abmessungen waren 9mm Durchmesser und 7 mm Höhe. Die Schwebekörper wiesen eine spezifische Oberfläche von ca. 800 m²/m³ auf.

Für die Versuche wurde künstliches Abwasser mit einem konstanten CSB-Wert von 500 mg/Liter durch verdünnen von Melasselösung mit Leitungswasser hergestellt. Dieses künstliche Abwasser wurde weiterhin mit Makronährstoffen wie Amminiumbicarbonat als zusätzliche Stickstoff-Quelle und mit KH₂PO₄ und K₂HPO₄ als Phosphorquelle versetzt. Der gesamte Ammoniakstickstoff des künstliches Abwassers war auf 40 mg Stickstoff pro Liter eingestellt. Dies entspricht dem Wert von häuslichem Abwasser.

Durch das in den Boden des Schwebebettreaktors eingesetzte, mit Düsenöffnungen versehene Rechteckrohr wurde mittel eines Kompressors über ein Durchflussmessgerät angesaugte Luft in den Schwebebettreaktor eingeführt. Der Quotient aus der vom Kompressor stündlich angesaugten und in den Schwebereaktor eingeführte Luftmenge in m³/h geteilt durch die Querschnittsfläche des Schwebebettreaktors hat die Dimension m/h und wird als Belüftungsrate oder Lehrraumluftgeschwindigkeit VL bezeichnet. Je größer die Belüftungsrate VL ist, desto größer ist die Turbulenz und die gegenseitige Reibung der im Abwasser suspendierten Schwebekörper.

Jeder Schwebebettreaktor wies in der Zufuhrleitung des Abwassers einen Dosierstutzen auf, durch welchen verdünnte wässrige DOSFOLAT®XS -Lösung zudosiert werden konnte.

Wie in DE 20 2009 008 291 beschrieben ist, tritt das Abwasser in jeder Reinigungsstufe unten in den Schwebebettreaktor ein, tritt oben aus dem Schlitzkranz in den Überlauf und wird durch eine Transferpumpe in den zweiten, unten angebrachten Zulaufstutzen des folgenden Schwebebettreaktor gefördert.

Der Ablauf aus dem Überlauf des zweiten Reaktor ist das gereinigte Abwasser welches noch suspendierten Überschussschlamm enthält. Durch Absetzenlassen des Überschlussschlammes welcher etwa 0,6 bis 0,8 Gewichtsprozent Feststoffe enthält und nach erfolgter Analyse mit bekannten Methoden wurde der dimensionslose Quotient Kg Überschussschlamm / kg verstoffwechseltes CSB als Maßzahl für die Überschussschlammproduktion bestimmt.

Das künstliche Abwasser wurde mittels einer Dosierpumpe von unten in den ersten der beiden in Reihe geschalteten Versuchs-Schwebebettreaktoren eingepumpt. Dabei wurde die Dosierrate in m3/h

Abwasser so eingestellt das der Quotient HRT, mit der Dimension h, berechnet aus dem Gesamtleervolumen der beiden in Reihe geschalteten Versuchs-Schwebebettreaktoren in m3 geteilt durch die Dosierrate in m3/h Abwasser entweder 6 oder 12 Stunden betrug. Die Temperatur des Abwassers betrüg 21 °C.

Nach einer Startperiode von etwa 6 Wochen wurde ein Gleichgewichtszustand bezüglich der CSB-Abbaurate und der visuell erkennbaren Bewuchsrate der Trägerkörper mir Mikroorganismen erkennbar.

Die Ergebnisse der Versuche sind in der nachstehenden Tabelle 1 aufgeführt.

| Versuch# | HRT | VL Luft | DOSFOLAT ® | Mikroorganismen an Schwebekörpern | Kg UeS/kg CSB | C-Abbau |
|---|---|---|---|---|---|---|
| | h | m/h | ppm | | kg/kg | % |
| 1 | 6 | 10 | 0 | aussen+innen | 0,4 | 85 |
| 2 | 6 | 20 | 0 | aussen+innen | 0,35 | 90 |
| 3 | 6 | 10 | 1 | aussen+Innen | 0,38 | 89 |
| 4 | 6 | 20 | 1 | innen | 0,2 | 91 |
| 5 | 6 | 30 | 3 | innen | 0,17 | 90 |
| 6 | 12 | 20 | 1 | innen | 0,17 | 93 |

### Dabei bedeutet:

Versuch# die Versuchsnummer,
HRT Aufenthaltsdauer (gesamt) des Abwassers in den Schwebebettreaktoren (Stunden),
VL Luft die Belüftungsrate VL,
DOSFOLAT ® die Zugabe an Folsäurezubereitung,
Mikroorganismen an Schwebekörpern, innen bzw. außen die Besiedlung der Schwebekörper innen bzw. außen,
Kg UeS/kg CSB das Gewicht an Überschussschlamm zu dem Gewicht des CSB, und
C-Abbau der Abbau von CSB.

Wie aus der Tabelle ersichtlich ist, führt allein das erfindungsgemäße Verfahren der Versuche 3, 4 und 5 dazu, dass das eingesetzte Abwasser weniger Überschussschlamm bildet. Erst wenn bei gleichzeitiger Zudosierung von stabilisierter Folsäure die Belüftungsrate VL in den Schwebebettreaktoren so erhöht wird, dass die Schwebekörper vorwiegend nur im Innern bewachsen, vermindert sich überraschenderweise die spezifische Überschussschlammmenge, wobei die CSB-Abbauleistungsfähigkeit der Vorrichtung nach DE 20 2009 008 291 noch erhöht wird.

### BEISPIEL 2

Eine kommunale biologische Kläranlage in Süddeutschland hat einen Abwasserzufluss mit einem mittleren Einwohnergleichwert von 33000 gemessen nach der Vorklärung. Aus dieser Vorklärung wurde ein Teilstrom des Abwassers entsprechend einem Belastungsstrom von 330 Einwohnergleichwerten durch zwei in Reihe geschaltete Schwebebettreaktoren nach DE 20 2009 008 291 zwecks CSB-Abbau geleitet. Die Schwebebettreaktoren bestanden aus Edelstahl, haben die in DE 20 2009 008 291 beschriebene Form, mit einen inneren Durchmesser von 950 mm und wiesen ein Leervolumen von je 2,2 m³ auf.

Der Schüttvolumenanteil an Schwebekörpern betrug 50 Prozent. Die Schwebekörper aus Polyäthylen wiesen die Form von Rohrabschnitten auf und waren außen und im Rohrinnern mit Rillen versehen. Die äußeren Abmessungen waren 9 mm Durchmesser und 7 mm Höhe. Die Schwebekörper wiesen eine spezifische Oberfläche von ca. 800 m²/m³ auf.

Den in Reihe geschalteten Schwebebettreaktoren wurde verdünnte wässrige DOSFOLAT®XS -Lösung zudosiert in einem Mengenverhältnis von 1 Gewichtsteil stabilisierte Folsäure auf 2 Millionen Teile Abwasser.

Durch die im Flachboden des Schwebebettreaktors eingelassenen Rechteckrohre, welche mit Düsenöffnungen zum Reaktorinnern versehen waren, wurde Druckluft mit erfindungsgemäß solcher Belüftungsintensität (VL = 20m/h) in den Schwebebettrektor geblasen, dass die Schwebekörpern vorwiegend nur im Innern mit Mikroorganismen bewuchsen.

In einem Beobachtungszeitraum von 400 Tagen betrug die spezifische Überschussschlammproduktion der oben genannten, kommunalen biologischen Kläranlage 0,5 Kg Überschussschlamm pro Kg verstoffwechseltes CSB.

Im gleichen Beobachtungszeitraum betrug die spezifische Überschussschlammproduktion der mit dem Teilstrom von 330 EWG beaufschlagten biologischen Abwasserreinigung mit den zwei in Reihe geschalteten Schwebebettreaktoren nach erfindungsgemäßer Verfahrensweise nur 0,1 Kg Überschussschlamm pro Kg verstoffwechseltes CSB. Dies entspricht einer Reduktion der spezifischen Überschussschlammmenge von 80% aufgrund der erfindungsgemäßen Verfahrenweise.

## Patentansprüche

1. Verfahren zum aeroben Betrieb von Schwebebettreaktoren mit innen und außen mit Rippen und/oder Rillen versehenen rohrförmigen Schwebekörpern, bei dem
dem zu reinigenden Abwasser eine verdünnte, wässrige Lösung stabilisierter Folsäure zudosiert wird, und bei dem
sauerstoffhaltiges Gas mit einer für aerobe Mikroorganismen ausreichenden Belüftungsrate (VL), die als Quotient aus der stündlich in den Schwebebettreaktor eingeführte Gasmenge in m³/h geteilt durch die Querschnittsfläche des Schwebebettreaktors in m² definiert ist, zugeführt wird,
**dadurch gekennzeichnet, dass**
die Folsäure mit 0,1 - 5 ppm, vorzugsweise mit 0,3 - 3 ppm, zu dem Abwasser zudosiert wird, dass
die Belüftungsrate mindesten ca. 20 m/h, vorzugsweise von 20 - 30 m/h, beträgt, dass Schwebekörper mit eine Länge von 5 bis 15 mm verwendet werden, und dass der Schwebebettreaktor zu 40 bis 70 % Volumenprozent mit Schwebekörper befüllt wird.

2. Verfahren nach Anspruch 1, **dadurch gekennzeichnet, dass** die Folsäurezubereitung Folsäure und/oder mindestens ein Ammonium-, Alkalimetall- und/oder Erdalkalimetallsalz derselben, sowie als Stabilisator eine Kombination aus Dihydrofolsäure und/oder mindestens einem Ammonium-, Alkalimetall-, Erdalkalimetall- und/oder Alkanolammoniumsalz derselben und mindestens einer Hydroxypolycarbonsäure und/oder mindestens einem Ammonium-, Alkalimetall-, Erdalkalimetall- und/oder Alkanolammoniumsalz derselben umfasst.

3. Verfahren nach Anspruch 1, **dadurch gekennzeichnet, dass** die Folsäurezubereitung Folsäure und/oder Dihydrofolsäure oder mindestens ein Ammonium, Alkalimetall, Erdalkalimetall und/oder Alkanolammonium Salz davon und eine wasserlösliche Molybdänverbindung und ein polydental Polyoxäthylenmittel enthält, wobei das polydental Polyoxäthylenmittel durch die folgende Formel I dargestellt wird, 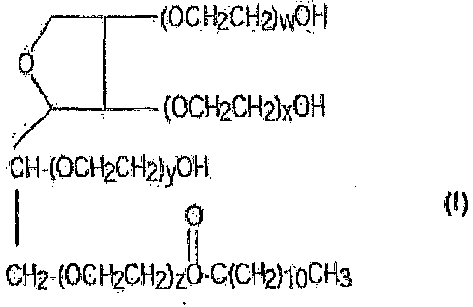 worin W + x + y + z Werte von 15 bis 25 hat.

4. Verfahren nach Anspruch 1, **dadurch gekennzeichnet, dass** als Schwebebettreaktor ein Durchlauftank (2) mit einem Tankboden (4), einer Tankwand (5), einem Zuflussstutzen (24) und einem Ablaufstutzen (26) verwendet wird, wobei in dem Durchlauftank (2) Schwebekörper (34) vorhanden sind, an die aerobe Mikroorganismen angelagert sind, und wobei an dem Durchlauftank (2) eine Belüftungseinrichtung zur Belüftung des Abwassers in dem Durchlauftank (2) mit einem sauerstoffhaltigen Gas vorgesehen ist, und wobei der Zuflussstutzen (24) und die Belüftungseinrichtung an dem Tankboden (4) und der Ablaufstutzen (26) an einem oberen Bereich des Durchlauftanks (2) angeordnet sind, und dass die Belüftungseinrichtung an dem Tankboden (4) des Durchlauftanks (2) wenigstens ein in den Tankboden (4) integriertes Verteilerrohr (6) mit Düsenöffnungen (8) an seinem mit dem Abwasser in Kontakt stehenden Seiten und mit einen Stutzen (32) zur Gaszufuhr aufweist.

5. Verfahren nach einem der vorhergehenden Ansprüche, **dadurch gekennzeichnet, dass** die Temperatur des Abwassers in den Schwebebettreaktoren zwischen etwa 12 bis 55 °C, vorzugsweise zwischen 20 und 35°C, beträgt.

## Claims

1. Process for aerobic operation of floating bed reactors by tubular floatation bodies provided internally and externally with ribs and/or grooves, in which
a diluted, aqueous solution of stabilized folic acid is dosed into the wastewater to be cleaned, and in which
oxygen containing gas is supplied with an aeration rate (VL) sufficient for the microorganisms, which is defined as the quotient of the amount of gas supplied into the floating bed reactor per hour in m3/h divided by the cross sectional of the floating bed reactor in m2,
**characterized in that**
the folic acid is dosed into the wastewater with 0,1 - 5 ppm, preferably with 0,3 - 3 ppm, that the aeration rate amounts to at least about 20 m/h, preferably 20 - 30 m/h, that flotation bodies are used having a length of 5 to 15 mm, and that
the floating bed reactor is filled up to 40 to 70 % percent by volume with floatation bodies.

2. Process according to claim 1, **characterized in that** the folic acid preparation comprises folic acid and/or at least an ammonium-, alkali metal- and/or earth alkali metal salt thereof as well as, as stabilizer, a combination of dihydrofolic acid and/or at least an ammonium-, alkali metal-, earth alkali metal- and/or alkanol ammonium salt thereof and at least a hydroxy polycarboxylic acid and/or at least an ammonium-, alkali metal-, earth alkali metal- and/or alkanol ammonium salt thereof.

3. Process according to claim 1, **characterized in that** the folic acid preparation contains folic acid and/or dihydrofolic acid or at least an ammonium-, alkali metal-, earth alkali metal- and/or alkanol ammonium salt thereof and a water-soluble molybdenum compound and a polydental polyoxyethylene substance wherein the polydental polyoxyethylene material is shown by the following formula II, 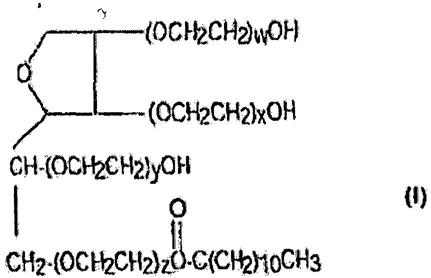 where W + x + y + z has values of 15 to 25.

4. Process according to claim 1,**characterized in that,** as a floating bed reactor, a circulation tank (2) having a tank bottom (4), a tank wall (5), an inflow stub (24) and an outflow stub (26) is used, wherein, in the circulation tank (2) flotation bodies (34) are present to which aerobic microorganisms are adhered, and wherein, at the circulation tank (2) an aeration device is provided for aerating the waste water in the circulation tank (2) with an oxygen containing gas, and wherein the inflow stub (24) and the aeration device are arranged at the tank bottom (4) and the outflow stub (26) is provided at the upper area of the circulation tank (2), and that the aeration device at the tank bottom (4) of the circulation tank (2) comprises at least one distribution tube (6) integrated into the tank bottom (4) and having nozzle openings (8) at its sides being in contact with the waste water, and a stub (32) for the gas supply.

5. Process according to one of the preceding claims, **characterized in that;** the temperature of the waste water in the floating bed reactors amount to between about 12 to 55 °C, preferably between 20 and 35 °C.

## Revendications

1. Procédé pour le fonctionnement aérobie de réacteurs à lit flottant disposant des corps flottants tubulaires ayant des nervures et/ou des rainures à leur intérieur et à leur extérieur, procédé lors duquel une solution aqueuse diluée d'acide folique stabilisé est ajoutée aux eaux usées à purifier et lors duquel du gaz oxygéné est admis à un débit d'aération (débit de l'air) suffisant pour des micro-organismes aérobies, le débit étant défini comme le quotient de la quantité de gaz (en m3/h) admise par heure dans le réacteur à lit flottant divisée par la surface de section transversale du réacteur à lit flottant (en m2),
procédé **caractérisé en ce que** l'acide folique est ajouté à 0,1 - 5 ppm, de préférence à 0,3-3 ppm, aux eaux usées, que le débit d'aération est d'environ 20 m/h au minimum, de préférence de 20 - 30 m/h, que des corps flottants d'une longueur de 5 à 15 mm sont utilisés et que le réacteur à lit flottant est rempli de corps flottants à une quantité de 40 à 70 % en volume.

2. Procédé selon la revendication 1, **caractérisé en ce que** la préparation d'acide folique contient de l'acide folique et/ou un sel d'ammonium, de métal alcalin et/ou de métal alcalino-terreux de celui-ci ainsi qu'un stabilisant comprenant une combinaison d'acide dihydrofolique et/ou d'au moins un sel d'ammonium, de métal alcalin et/ou de métal alcalino-terreux et/ou d'alcanolammonium de celui-ci et d'au moins un acide hydroxypolycarboxylique et/ou d'au moins un sel d'ammonium, de métal alcalin et/ou de métal alcalino-terreux et/ou d'alcanolammonium de celui-ci.

3. Procédé selon la revendication 1, **caractérisé en ce que** la préparation d'acide folique contient de l'acide folique et/ou de l'acide dihydrofolique ou au moins un sel d'ammonium, de métal alcalin, de métal alcalino-terreux et/ou d'alcanolammonium de ceux-ci ainsi qu'un composé de molybdène soluble dans l'eau et un produit polydental à base de polyoxyéthylène, le produit polydental à base de polyoxyéthylène étant défini par la formule I suivante, 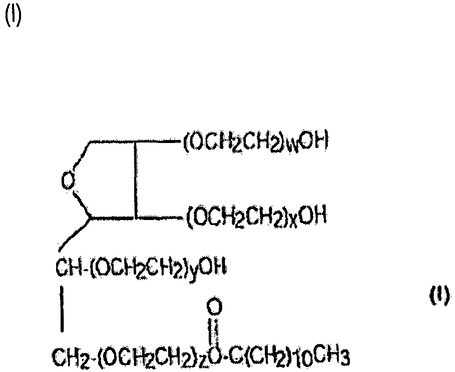 W + x + y + z se composant de valeurs entre 15 et 25.

4. Procédé selon la revendication 1, **caractérisé en ce qu'**une cuve de passage (2) avec un fond de cuve (4), une paroi de cuve (5), un raccord d'admission (24) et un raccord d'échappement (26) est utilisée comme réacteur à lit flottant, la cuve de passage (2) contenant des corps flottants (34) auxquels sont liés des micro-organismes aérobies, et un dispositif d'aération étant prévu pour aérer les eaux usées se trouvant dans la cuve de passage (2) à l'aide d'un gaz oxygéné, et le raccord d'admission (24) et le dispositif d'aération au fond de cuve (4) et le raccord d'échappement (26) sont disposés dans une partie supérieure de la cuve de passage (2), et que le dispositif d'aération au fond (4) de la cuve de passage (2) dispose d'au moins un tuyau de répartition (6) intégré dans le fond de cuve (4) qui dispose d'ouvertures de buses (8) à ses côtés étant en contact avec les eaux usées et d'un raccord (32) pour l'admission du gaz.

5. Procédé selon l'une quelconque des revendications précédentes, **caractérisé en ce que** la température des eaux usées étant dans les réacteurs à lit flottant s'élève à environ 12 à 55°C, de préférence à entre 20 et 35°C.
